# EUROPÄISCHE PATENTSCHRIFT

(11) **EP 1 286 926 B1**
(45) Veröffentlichungstag und Bekanntmachung des Hinweises auf die Patenterteilung: **15.09.2004**
(21) Anmeldenummer: 01940507.5
(22) Anmeldetag: 21.05.2001
(51) Int. Cl.: C03B 37/012, C03B 37/014

(54) **VERFAHREN FÜR DIE HERSTELLUNG EINER OPTISCHEN FASER**
METHOD FOR PRODUCING AN OPTICAL FIBRE
PROCEDE DE FABRICATION D'UNE FIBRE OPTIQUE

(30) Priorität: 24.05.2000 DE 10025176
(43) Veröffentlichungstag der Anmeldung: 05.03.2003
(73) Patentinhaber: Heraeus Tenevo AG, 63450 Hanau (DE)
(72) Erfinder: FABIAN, Heinz, 63762 Grossostheim (DE)
(74) Vertreter: Staudt, Armin, Dipl.-Ing.
(86) Internationale Anmeldenummer: PCT/EP2001/005771
(87) Internationale Veröffentlichungsnummer: WO 2001/090010

(56) Entgegenhaltungen:
- EP-A- 0 309 027
- EP-A- 0 598 349
- EP-A- 0 887 670
- EP-A- 0 972 752
- EP-A- 1 000 908
- WO-A-00/27767
- WO-A-01/32572
- WO-A-01/40125
- GB-A- 2 208 114
- PATENT ABSTRACTS OF JAPAN vol. 11, no. 259, 21. August 1987 (1987-08-21) & JP 62 059543 A (MITSUBISHI CABLE IND LTD), 16. März 1987 (1987-03-16)

## Beschreibung

Die vorliegende Erfindung betrifft ein Verfahren für die Herstellung einer optischen Faser durch Ziehen aus einer eine Kern-Mantelstruktur aufweisenden Vorform oder aus einer eine Kern-Mantelstruktur bildenden koaxialen Anordnung mehrerer Bauteile, durch Erzeugen eines Kernzylinders in einem Soot-Abscheideverfahren, wobei der Kernzylinder eine Kernglasschicht mit einem höheren Brechungsindex "n_{K}" und einem Außendurchmesser "d_{K}" aufweist, die von einer ersten Mantelglasschicht mit einem niedrigeren Brechungsindex "n_{M1}" und einem Außendurchmesser "d_{M1}" umgeben ist, und Aufbringen einer zweiten Mantelglasschicht auf den Kernzylinder, wobei die zweite Mantelglasschicht in Form eines in einem separaten Verfahrensschritt erzeugten Mantelrohres, das einen mittleren OH-Gehalt von maximal 1 Gew.-ppm aufweist, bereitgestellt und durch Aufkollabieren des Mantelrohres auf den Kernzylinder erzeugt wird, wobei ein Kernzylinder eingesetzt wird, bei dem das Verhältnis von "d_{M1}" zu "d_{K}" größer als 1 und kleiner als 2,2 ist, und der in einem oberflächennahen Bereich bis zu 10 µm Tiefe einen mittleren OH-Gehalt von maximal 1 Gew.-ppm aufweist,

Der Einsatz von Lichtleitfasern zur Datenübertragung hat in den letzten 20 Jahren an wirtschaftlicher Bedeutung gewonnen. Nachdem die Lichtleitfasern zunächst hinsichtlich ihrer optischen Dämpfung und der Faserfestigkeit verbessert wurden, ist nunmehr die Kostensenkung zentrales Thema. Mögliche Ansatzpunkte hierfür sind die Erhöhung der Übertragungskapazität pro Lichtleitfaser und die Senkung der Herstellkosten der Lichtleitfasern. Die Herstellung von sogenannten Single-Mode-Lichtleitfaservorformen für kommerzielle Anwendungen erfolgt im wesentlichen nach den bekannten OVD- (Outside-Vapor-Deposition), MCVD- (Modified-Chemical-Vapor-Deposition, PCVD- (Plasma-Chemical-Vapor-Deposition) und VAD-(Vapor-Axial-Deposition) -Verfahren. Allen Verfahren ist gemein, daß zunächst ein Kernzylinder hergestellt wird, der den Kern und einen Teil des Mantels der späteren Single-Mode-Lichtleitfaser umfasst. Auf den Kernzylinder wird weiteres Quarzglas aufgebracht, das als "Jacketmaterial" bezeichnet wird. Die Qualität dieses Jacketmaterials ist für die mechanische Festigkeit der Lichtleitfaser von Bedeutung, während der Einfluß auf die optischen Eigenschaften bisher nur eine untergeordnete Rolle spielt.

In der US-A 5,838,866 ist die Herstellung einer Quarzglas-Vorform für eine Single-Mode-Lichtleitfaser beschrieben, wobei in einem ersten Verfahrensschritt ein als "Kern-Vorform" bezeichnetes Bauteil mit Kern-Mantelstruktur nach dem sogenannten OVD-Verfahren hergestellt wird. Die Kern-Vorform besteht aus einer mit Germaniumdioxid dotierten SiO₂-Kernglasschicht, die von einer inneren SiO₂-Mantelglasschicht umhüllt ist. Die jeweiligen Schichtdicken sind so ausgelegt, dass nach dem Kollabieren der Innenbohrung das Verhältnis des Durchmessers "d_{K}" der Kernglasschicht und des Außendurchmessers der ersten Mantelglasschicht "d_{M1}" bei 2,39 liegt. Durch Abscheiden einer weiteren SiO₂-Sootschicht zur Bildung einer zweiten, äußeren Mantelglasschicht wird die endgültige Vorform erhalten.

Der der Kern-Vorform zugeordnete und an die Kernglasschicht unmittelbar angrenzende Teil des Mantels wird im folgenden als "erste Mantelglasschicht" bezeichnet. Die erste Mantelglasschicht trägt wesentlich zur Lichtführung bei und hat daher einen deutlichen Einfluss auf die optischen Eigenschaften des Lichtleiters. An die erste Mantelglasschicht sind deshalb hinsichtlich Reinheit und Homogenität vergleichbare Maßstäbe anzulegen wie bei der Kernglasschicht, so dass die Herstellung der ersten Mantelglasschicht auch dementsprechend aufwendig ist.

Bei dem bekannten Verfahren wird für die Abscheidung der SiO₂-Sootschicht zur Bildung der zweiten Mantelglasschicht auf dem Kernzylinder ein Knallgasbrenner eingesetzt. Dadurch kommt es zu einem Einbau von OH-Gruppen in die erste Mantelglasschicht. Diese OH-Gruppen sind im Quarzglas der ersten Mantelglasschicht fest gebunden und lassen sich durch die anschließende Behandlung der Soot-Schicht in chlorhaltiger Atmosphäre nicht entfernen. Die nach dem bekannten Verfahren hergestellte Vorform zeigt daher im Bereich der Grenzfläche zwischen erster und zweiter Mantelglasschicht üblicherweise eine deutlich erhöhte OH-Konzentration.

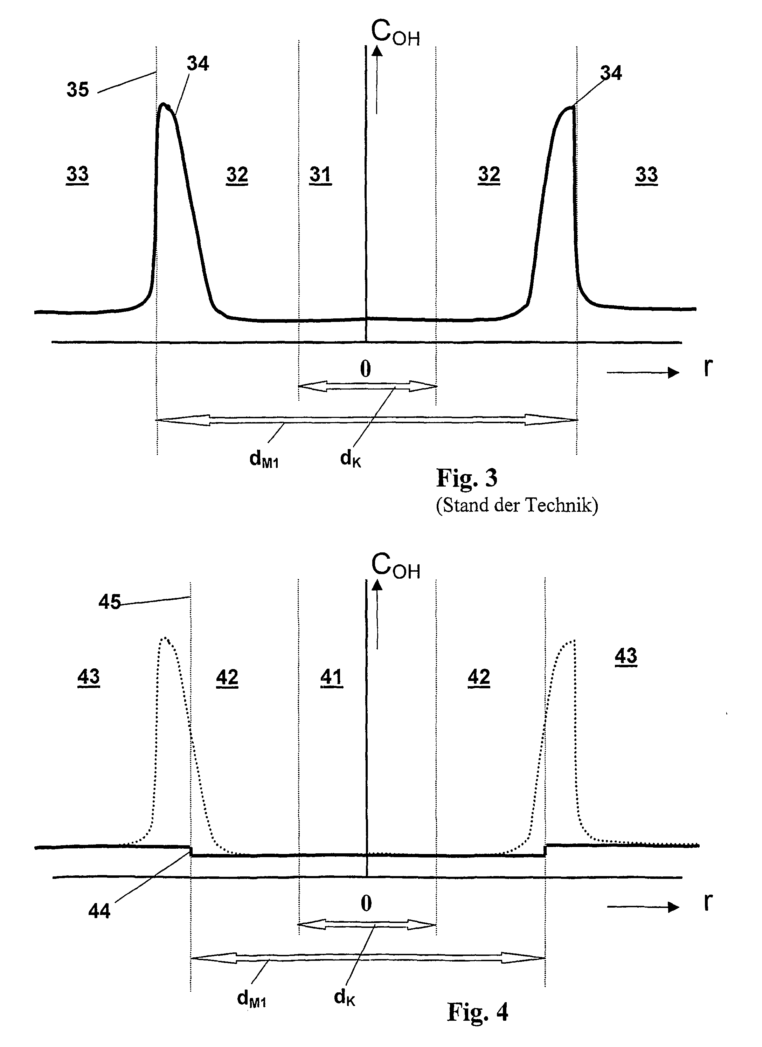

Einen typischen Verlauf der OH-Konzentration über den Durchmesser einer nach dem bekannten OVD-Verfahren hergestellten Vorform ist in Figur 3 schematisch dargestellt. Auf der y-Achse des Diagramms ist der OH-Gehalt und auf der x-Achse der Vorformdurchmesser aufgetragen. Die Kernglasschicht 31 und der innere Bereich der ersten Mantelglasschicht 32 zeigen einen geringen OH-Gehalt. Der Bereich um die Grenzfläche 35 zwischen der ersten Mantelglasschicht 32 und der zweiten Mantelglasschicht 33 ist durch ein Maximum 34 der OH-Konzentration deutlich erkennbar.

OH-Gruppen zeigen im infraroten Spektralbereich eine besonders starke Absorptionsbande. Bereits geringe OH-Gehalte im lichtführenden Bereich einer Single-Mode-Faser können sich daher auf deren optische Dämpfung bei den üblichen Übertragungswellenlängen auswirken. Um den Einfluß des in Figur 3 gezeigten Maximums 34 der OH-Konzentration auf die optische Dämpfung gering zu halten, liegt bei den bekannten OVD-Vorformen die Grenzfläche 35 zwischen der ersten Mantelglasschicht 32 und der zweiten Mantelglasschicht 33 weitab von der Kernglasschicht 31. Mit anderen Worten, der Außendurchmesser "d_{M1}" der ersten Mantelglasschicht 32 ist relativ groß; bei der Vorform gemäß Figur 3 beträgt der Außendurchmesser "d_{M1}" der ersten Mantelglasschicht 32 das 2,39-fache des Durchmessers "d_{K}" der Kernglasschicht 31.

Eine Verringerung des Außendurchmessers "d_{M1}" der ersten Mantelglasschicht 32 würde das Maximum 34 der OH-Konzentration näher an die Kernglasschicht 31 heranbringen und sich daher stärker auf die Dämpfung der Faser auswirken. Es ist daher bei dem bisherigen Verfahren nicht möglich, den Anteil der aufwendig herzustellenden, inneren Mantelglasschicht 32 an der Vorform ohne Inkaufnahme einer höheren optischen Dämpfung zu verringern.

Aus der EP 0 972 572 A ist weiteres Verfahren zur Herstellung einer Vorform mittels Stab-In-Rohr-Technik bekannt, wobei zunächst nach dem MCVD-Verfahren (Modified Chemical Vapour Deposition) ein Kernstab hergestellt wird. Hierzu wird auf der Innenwandung eines Substratrohres, das einen OH-Gehalt von 0,5 ppm hat, zunächst Mantelmaterial und dann das Kernmaterial abgeschieden. Der Kernstab wird anschließend mit einem Mantelglasrohr überfangen. Der Kernstab enthält daher mindestens zwei Mantelglasschichten, wovon die eine von dem Substratrohr stammt und die die andere, durch MCVD-Verfahren abgeschiedene, innere Mantelglasschicht umgibt. Die vom Substratrohr stammende Mantelglasschicht bildet daher eine "zweite Mantelglasschicht" und das Mantelglasrohr eine dritte Mantelglasschicht. Die Kernglasschicht und die innere Mantelglasschicht weisen ein d_{M1}/d_{K}-Verhältnis von weniger als 3 auf, wobei konkret ein d_{M1}/d_{K}-Verhältnis von 1,64 genannt wird. Das Substratrohr (die zweite Mantelglasschicht) nicht durch Aufkollabieren eines Rohres aufgebracht, und insbesondere nicht durch Aufkollabieren auf einen Kernstab mit kleinem d_{M1}/d_{K}-Verhältnis. Damit stellen sich bei dem bekannten Verfahren zwar die oben erwähnten Qualitätsprobleme hinsichtlich der OH-Verunreinigungen beim Ummanteln eines Kernstabs mit kleinem d_{M1}/d_{K}-Verhältnis nicht, allerdings ist das Verfahren aufwändig und langwierig.

Bei dem Verfahren zur Herstellung einer Monomode-Lichtleitfaser mittels Stab-In-Rohr-Technik gemäß der EP 0 309 027 A steht die Kostenoptimierung im Vordergrund. Nach dem PCVD-Verfahren (Plasma induced Vapour Deposition) werden in einem Substratrohr Innenbeschichtungen erzeugt, die einen ersten Teil des Mantels (β1) und den Kern (α) umfassen. Zur Durchführung des Verfahren werden Substratrohre mit Innendurchmessern zwischen 15 mm und 25 mm benötigt. Nach dem Kollabieren des Substratrohres inklusive der darin durch die Innenabscheidung erzeugten Kern-Mantelstruktur wird ein optisches Bauteil erhalten, das einen "Kernstab" vergleichbar zu der EP 0 972 572 A. Das so erzeugte Bauteil wird anschließend mit mehreren Überfangrohren ummantelt. Angaben über die OH-Gehalte der oberflächennahen Bereiche des Kernstabes bzw. über OH-Gehalte der eingesetzten Überfangrohre finden sich nicht.

Auch in der GB 2 208 114 A geht es um die Herstellung einer großvolumigen Vorform zur Erzeugung einer optischen Monomode-Faser, wobei gemäß den beiden Ausführungsbeispielen zunächst mittels des VAD-Verfahrens ein Kernstab hergestellt wird, der ein Mantel-Kernverhältnis von 2,63 bzw. von 2,46 aufweist. Die Oberfläche der Kernstäbe wird jeweils anschließend in Flusssäurelösung (HF) abgeätzt. Dadurch ergibt sich in jedem Fall eine oberflächliche Belegung der Kernstäbe mit OH-Gruppen. Konkrete Angaben zum OH-Gehalt der Oberflächenschicht des Kernstabs finden sich nicht. Gemäß einem Ausführungsbeispiel wird der Kernstab mit einem Mantelrohr überfangen, das einen OH-Gehalt von 1 ppm aufweist.

Ein Verfahren der eingangs angegebenen Gattung ist aus der EP 0 887 670 A1 bekannt. Darin geht es um ein Verfahren zur Herstellung einer Vorform durch Überfangen eines Kernstabes mittels Stab-In-Rohr-Technik. Es wird vorgeschlagen, einen Kernstab mit einem Verhältnis von "d_{M1}/dK" von weniger als 7,5 und einem OH-Gehalt von weniger als 0,8 wt-ppb mit einem Mantelrohr zu überfangen, das einen geringen OH-Gehalt aufweist. Der Kernstab wird nach dem sogenannten VAD-Verfahren (Vapour Axial Deposition) hergestellt und zunächst elongiert, wobei er mittels einer Sauerstoff-Wasserstoff-Flamme erhitzt wird. Dadurch werden zwangsläufig OH-Gruppen in den Kernstab eingebracht. Um diese OH-Gruppen wieder zu entfernen wird der Kernstab bis zu einer Tiefe von 0,25 ± 1,5 mm oberflächlich abgeätzt. Eine Angabe über den OH-Gehalt nach dem Entfernen der Oberflächenschicht findet sich nicht. Für das Verhältnis d_{M1}/d_{K} werden Werte von unter 2 und insbesondere zwischen 2 und 7,5 genannt. Das Ausführungsbeispiel nennt einen Wert für dieses Verhältnis von 4,2 und in der Tabelle werden dM₁/d_{K} Verhältnisse zwischen 4,4 und 7,5 erwähnt. Die auf dem Kernstab erzeugte, zweite Mantelglasschicht wird aus Kostengründen dickwandig mit einem Außendurchmesser von 63 mm und einem Innendurchmesser von 19 mm ausgeführt, woraus sich ein Verhältnis von Außendurchmesser zu Innendurchmesser von mehr als 3,3 errechnet.

Der Erfindung liegt daher die Aufgabe zugrunde, ein kostengünstiges Verfahren für die Herstellung einer optischen Faser mit geringer optischer Dämpfung anzugeben und eine entsprechende Vorform bereitzustellen.

Hinsichtlich des Verfahrens wird diese Aufgabe ausgehend von dem eingangs genannten Verfahren erfindungsgemäß dadurch gelöst, dass der Kernzylinder nach einem OVD- Außenabscheideverfahren hergestellt wird, und dass die zweite Mantelglasschicht mit einem Verhältnis von Außendurchmesser zu Innendurchmesser im Bereich zwischen 1,8 und 3 erzeugt wird und von mindestens einer weiteren, dritten Mantelglasschicht umgeben wird.

Die zweite Mantelglasschicht wird in Form eines in einem separaten Verfahrensschritt erzeugten Mantelrohres bereitgestellt. Ein derartiges Mantelrohr ist nach den üblichen OVD-Sootabscheideverfahren durch Flammenhydrolyse einer siliziumhaltigen Ausgangsverbindung kostengünstig herstellbar. Der OH-Gehalt des Soot-Mantelrohres lässt sich durch die bekannten Dehydratationsverfahren reduzieren und auf einen vorgegebenen Wert von 1 Gew.-ppm oder weniger einstellen. Je niedriger der mittlere OH-Gehalt des Mantelrohres - insbesondere im Bereich von dessen Innenbohrung - ist, umso geringer ist der durch Hydroxylgruppen (OH-Gruppen) verursachte Dämpfungsanteil. Üblicherweise ist der OH-Gehalt über die Wandung des Mantelrohres konstant, so dass sich aus dem konstanten Wert der mittlere OH-Gehalt unmittelbar ergibt. Bei einem davon abweichenden Verlauf wird der über die Mantelrohr-Wandung gemittelte OH-Gehalt als mittlerer OH-Gehalt definiert. Der mittlere OH-Gehalt läßt sich besonders einfach durch eine spektroskopische Messung durch die Rohrwand ermitteln.

Das Aufbringen der zweiten Mantelglasschicht erfolgt durch Aufkollabieren des Mantelrohres auf den Kernzylinder. Eine Beaufschlagung der ersten Mantelglasschicht mit einem wasserstoffhaltigen Gas und der damit einhergehende Einb au von Hydroxylgruppen im Quarzglas der ersten Mantelglasschicht wird so vermieden. Durch das Aufkollabieren des Mantelrohres werden keine oder allenfalls geringe Mengen an Hydroxylgruppen erzeugt.

Der erfindungsgemäß einzusetzende Kernzylinder wird nach dem OVD-Außenabscheideverfahren hergestellt. Mittels OVD-Verfahren ist ein Kernzylinder mit kleinem Durchmesserverhältnis "d_{M1}" /"d_{K}" besonders einfach und kostengünstig herstellbar. Der Kernzylinder kann als Stab oder als Rohr vorliegen. Der Einfachheit halber beziehen sich die folgenden Erläuterungen auf einen stabförmigen Kernzylinder, wobei davon ein rohrförmiger Kernzylinder nicht ausgeschlossen sein soll, sofern dies nicht ausdrücklich erwähnt ist. Derartige Kernzylinder werden durch schichtweise Abscheidung von SiO₂-Soot auf der Zylindermantelfläche eines zylinderförmigen Trägers hergestellt (OVD-Verfahren) oder durch axiale Abscheidung auf der Stirnfläche eines rotierenden Substrats (VAD-Verfahren).

Die erste Mantelglasschicht des Kernzylinders weist in einem oberflächennahen Bereich bis zu 10 µm Tiefe einen mittleren OH-Gehalt von maximal 1 Gew.-ppm auf. Dadurch, dass die zweite Mantelglasschicht durch Aufkollabieren des Mantelrohres erfolgt, wird der OH-Gehalt der ersten Mantelglasschicht nicht oder nur unwesentlich beeinflusst. Der mittlere OH-Gehalt in einem oberflächennahen Bereich von 10 µm Tiefe lässt sich spektroskopisch durch eine Differenzmessung ermitteln.

Zur Lösung der oben genannten technischen Aufgabe trägt wesentlich bei, dass ein Kernzylinder eingesetzt wird, bei dem das Durchmesserverhältnis "d_{M1}" /"d_{K}" größer als 1 und kleiner als 2,2 ist. Der Außendurchmesser der ersten Mantelglasschicht "d_{M1}" beträgt somit weniger als das 2,2-fache des Durchmessers der Kernglasschicht "d_{K}". Das Durchmesserverhältnis "d_{M1}" /"d_{K}" bezieht sich auf einen Kernzylinder ohne Innenbohrung. Bei einem rohrförmigen Kernzylinder sind die Durchmesser der jeweiligen Schichten nach dem Kollabieren der Innenbohrung maßgebend.

Die zweite Mantelglasschicht ist von mindestens einer weiteren, dritten Mantelglasschicht umgeben. Mittels der weiteren Mantelglasschicht oder den Die dritte und jede weitere Mantelglasschicht hat auf die Lichtführung der Faser keine wesentlichen Auswirkungen. Daher sind die Anforderungen an die optischen Eigenschaften des Quarzglases für die dritte Mantelglasschicht vergleichsweise gering. Das dafür benötigte Quarzglas ist daher besonders kostengünstig herstellbar. Aus diesem Grunde wird die zweite Mantelglasschicht so dünn wie möglich, jedoch so dick wie nötig ausgeführt. Im Hinblick hierauf wird erfindungsgemäß ein Mantelrohr eingesetzt derart, dass die daraus nach dem Aufkollabieren erhaltene Mantelglasschicht ein Verhältnis von Außendurchmesser zu Innendurchmesser von mindestens 1,8 aufweist, wobei das Verhältnis von Außendurchmesser zu Innendurchmesser der Mantelglasschicht bei weniger als 3 liegt. Das Verhältnis von Außendurchmesser zu Innendurchmesser der Mantelglasschicht bezieht sich auf einen Kernzylinder ohne Innenbohrung. Bei einem rohrförmigen Kernzylinder sind für die Ermittlung des genannten Durchmesserverhältnisses der Außendurchmesser und der Innendurchmesser der Mantelglasschicht nach dem Kollabieren der Innenbohrung maßgebend. Im Vergleich zu der eingangs beschriebenen, bekannten optischen Faser ist der Volumenanteil der aufwendig herzustellenden ersten Mantelglasschicht zu Gunsten des übrigen, weitaus kostengünstiger herstellbaren Mantelmaterials reduziert. Diese Reduzierung wird erst durch die Kombination der oben erläuterten Maßnahmen ermöglicht, indem diese dazu beitragen, dass bei Einsatz eines nach dem Soot-Abscheideverfahren hergestellten Kernzylinders im Bereich um die Grenzfläche zwischen erster und zweiter Mantelglasschicht ein OH-Gehalt von maximal 1 Gew.-ppm erhalten wird. Denn erst der geringe OH-Gehalt in diesem grenzflächennahen Bereich erlaubt es, den Außendurchmesser der ersten Mantelglasschicht so zu reduzieren, dass das Durchmesserverhältnis "d_{M1}" /"d_{K}" zwischen 1 und 2,2 liegt, ohne dass sich der OH-Gehalt im grenzflächennahen Bereich auf die optische Dämpfung der Faser wesentlich auswirkt.

Somit ermöglicht es das erfindungsgemäße Verfahren, eine optische Faser mit geringer Dämpfung kostengünstig nach dem Soot-Abscheideverfahren herzustellen.

Die Faser wird zum Beispiel aus einer eine Kern-Mantelstruktur aufweisenden Vorform gezogen, wobei in der Vorform der Kernzylinder vom Mantelrohr und etwaigem weiteren Mantelmaterial umgeben ist. Es ist aber auch möglich, die Faser aus einer eine Kern-Mantelstruktur bildenden koaxialen Anordnung mehrerer Bauteile zu ziehen. Dabei wird der Kernzylinder innerhalb des Mantelrohr und etwaigem weiteren Mantelmaterial in Rohrform koaxial angeordnet. Das Mantelmaterial inklusive des Mantelrohrs wird während des Faserziehens auf den Kernzylinder kollabiert.

Die vorliegende Erfindung betrifft ausschließlich die Herstellung von Standard-Single-Mode-Fasern und eine Vorform dafür. Bei den Standard-Single-Mode-Fasern handelt es sich um einfache Stufenindexfasern. Die in den Fasern geführte Lichtwelle erstreckt sich im wesentlichen über den Kernbereich und den inneren Mantelbereich.

Die vorliegende Erfindung ermöglicht eine Minimierung des hochwertigen Quarzglases für den inneren Mantelbereich zu Gunsten von preiswerterem Quarzglas. Die Erfindung bezieht sich nicht auf sogenannte "dispersionsverschobene Fasern" oder "dispersionsgeglättete Fasern". Derartige Fasern weisen komplexe Brechzahlprofile mit einer radialen Abfolge mehrerer Schichten unterschiedlicher Brechzahl auf. Alle diese Schichten wirken an der Lichtführung mit, so dass dafür hochwertiges Quarzglas erforderlich ist, das nicht ohne Qualitätsverlust zu Gunsten von preiswerterem Quarzglases minimiert werden kann.

Der Einfluss des OH-Gehalts auf die optische Dämpfung ist umso geringer, je geringer der OH-Gehalt im oberflächennahen Bereich des Kernzylinders und im Mantelrohr ist. Als besonders günstig hat es sich erwiesen, ein Mantelrohr mit einem mittleren OH-Gehalt von maximal 0,5 Gew.-ppm, und einen Kernzylinder mit einem mittleren OH-Gehalt in einem oberflächennahen Bereich bis zu 10 µm Tiefe von maximal 0,5 Gew.-ppm einzusetzen. Vorzugsweise beträgt der mittlere OH-Gehalt von Mantelrohr und oberflächennahem Bereich des Kernzylinders jeweils maximal 0,2 Gew.-ppm, und besonders bevorzugt jeweils maximal 0,1 Gew.-ppm.

Erfindungsgemäß wird ein Anteil der aufwendig herstellbaren ersten

Mantelglasschicht am Gesamtvolumen der optischen Faser durch preiswerteres Mantelmaterial ersetzt. Der durch das preiswertere Mantelmaterial ersetzte Anteil ist umso größer, je kleiner das Durchmesserverhältnis "d_{M1}" zu "d_{K}" im Kernzylinder ist. Als besonders günstig hat es sich erwiesen, einen Kernzylinder mit einem Verhältnis von "d_{M1}" zu "d_{K}" von kleiner als 2,0 und vorzugsweise von kleiner als 1,7 einzusetzen.

Für die Herstellung der Vorform oder für die eine Kern-Mantelstruktur bildende koaxiale Anordnung von Bauteilen wird entweder ein aus Quarzglas bestehendes Mantelrohr eingesetzt, oder ein aus SiO₂-Soot bestehendes, poröses Mantelrohr. Bei Einsatz eines aus Quarzglas bestehenden Mantelrohrs wird die Ausbildung einer störungsfreien Grenzfläche zwischen erster und zweiter Mantelglasschicht erleichtert, was sich auf die optische Dämpfung der Faser positiv auswirkt. Der Einsatz eines aus SiO₂-Soot bestehenden Mantelrohrs ist demgegenüber kostengünstiger, da das Mantelrohr beim Aufkollabieren auf den Kernzylinder verglast wird, so dass ein separater Heißbehandlungsschritt zum Verglasen des Mantelrohres entfällt.

Als besonders günstig hat es sich erwiesen, ein Mantelrohr mit einem Brechungsindex "n_{M2}" einzusetzen, wobei "n_{M2}" ≤ "n_{M1}" ist. Bei einem Brechungsindex "n_{M2}" = "n_{M1}" wird die Lichtführung in der Faser durch die zweite Mantelglasschicht nicht merklich beeinflußt, während bei einem Brechungsindex "n_{M2}" < "n_{M1}" der in der zweiten Mantelglasschicht geführte Lichtanteil weiter reduziert wird, so dass die Anforderungen an die optischen Eigenschaften des Quarzglases für diese Schicht geringer sind. Dadurch wird Herstellung des Quarzglases für die zweite Mantelglasschicht vereinfacht und die Herstellungskosten werden gesenkt.

Besonders bewährt hat sich ein Einsatz eines Mantelrohrs aus fluordotiertem Quarzglas. Durch eine Fluordotierung kann der Brechungsindex von Quarzglas gesenkt werden, so dass sich mittels eines fluordotierten Mantelrohres die Brechungsindex-Bedingung "n_{M2}" < "n_{M1}" besonders einfach und preiswert einstellen lässt.

In einer bevorzugten Verfahrensvariante wird die dritte Mantelglasschicht in Form eines Quarzglas-Hohlzylinders bereitgestellt, der zusammen mit dem Mantelrohr auf den Kernzylinder aufkollabiert wird. Die Kosten des Verfahrens werden gesenkt, da hierbei in einem Verfahrensschritt mehrere Rohre gleichzeitig auf den Kernzylinder kollabiert werden.

In einer alternativen, jedoch gleichermaßen bevorzugten Verfahrensvariante wird die dritte Mantelglasschicht in Form eines Hohlzylinders aus porösem SiO₂-Soot bereitgestellt, der nach dem Aufkollabieren des Mantelrohres auf die den Kernzylinder umschließende, zweite Mantelglasschicht aufgeschrumpft wird. Auch diese Verfahrensvariante hat Vorteile hinsichtlich der Herstellkosten, denn der Hohlzylinder aus porösem SiO₂-Soot wird beim Aufschrumpfen auf das Mantelrohr gleichzeitig verglast. Für den Teil des Mantels, der in Form eines Hohlzylinder aus SiO₂-Soot bereitgestellt wird, entfällt somit ein separater Verglasungsschritt.

In einer weiteren, ebenfalls geeigneten Verfahrensvariante wird die dritte Mantelglasschicht nach dem Aufkollabieren des Mantelrohres auf den Kernzylinder durch Außenabscheidung von SiO₂-Soot erzeugt. Die so erzeugte dritte Mantelglasschicht aus SiO₂-Soot wird anschließend verglast. Auch diese Verfahrensvariante hat Kostenvorteile, da die separate Herstellung eines Rohres für die dritte Mantelglasschicht entfallen kann.

Insbesondere im Hinblick auf geringe Herstellungskosten hat sich auch eine Verfahrensvariante als günstig erwiesen, bei der die zweite und die dritte Mantelglasschicht erzeugt werden, indem ein außen mit porösem SiO₂-Soot beschichtetes Mantelrohr bereitgestellt und auf den Kernzylinder aufkollabiert wird. Hierbei erfolgt das Ummanteln des Kernzylinders mit der zweiten und der dritten Mantelglasschicht in einem gemeinsamen Verfahrensschritt, indem beim Kollabieren gleichzeitig die Schicht aus porösem SiO₂-Soot verglast wird.

Vorzugsweise werden der Außendurchmesser des Kernzylinders und der Innendurchmesser des Mantelrohres so gewählt, dass das Aufkollabieren eine koaxiale Anordnung von Mantelrohr und Kernzylinder unter Bildung eines Ringspalt umfasst, wobei während des Aufkollabierens wasserstoffhaltige Substanzen im Ringspalt vermieden werden. Durch den Ausschluss wasserstoffhaltiger Substanzen im Ringspalt wird die Bildung von Hydroxylgruppen in den an den Ringspalt angrenzenden Wandungen vermieden. Dies wird vorzugsweise dadurch erreicht, dass im Ringspalt ein Unterdruck erzeugt wird und/oder der Ringspalt Helium, Chlor, Fluor oder ein Gemisch dieser Gase enthält. Dies erfolgt vorzugsweise durch kontinuierliches Spülen des Ringspalts mit den genannten Gasen oder

Gasgemischen.

Nachfolgend wird die Erfindung anhand von Ausführungsbeispielen und einer Zeichnung näher erläutert. In der Zeichnung zeigen in schematische Darstellung im einzelnen:
- **Figur 1**: eine Ausführungsform einer nach dem erfindungsgemäßen Verfahren hergestellten Vorform zur Herstellung einer Single-Mode-Faser in einem radialen Schnitt,
- **Figur 2**: ein Ausführungsbeispiel zur erfindungsgemäßen Herstellung einer Vorform anhand eines Fließdiagramms mit einzelnen Verfahrensschritten,
- **Figur 3**: einen typischen Verlauf der OH-Konzentration über den Durchmesser bei einer nach dem Stand der Technik hergestellten Vorform in einem Ausschnitt, und
- **Figur 4**: einen typischen Verlauf der OH-Konzentration über den Durchmesser einer erfindungsgemäßen Vorform in einem Ausschnitt.

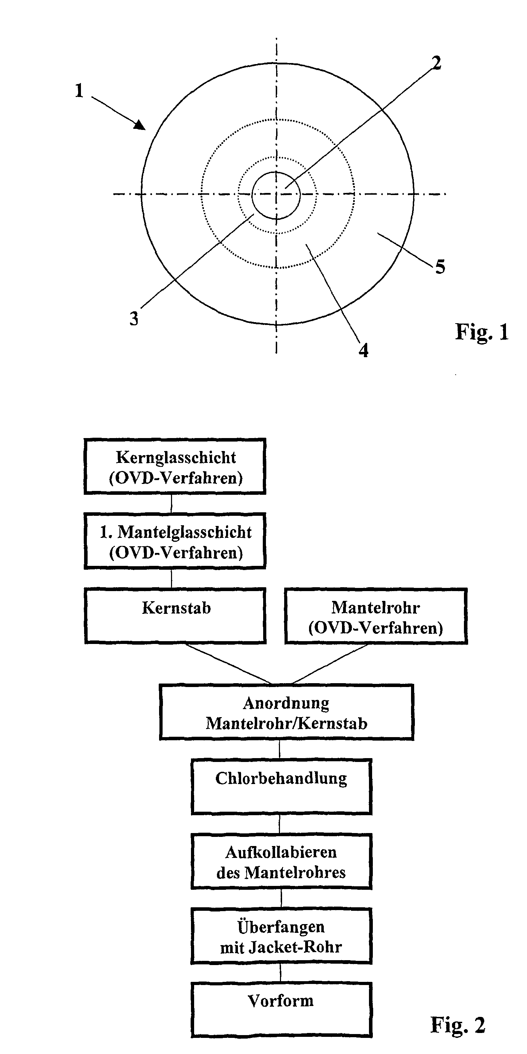

In **Figur 1** ist die Bezugsziffer 1 insgesamt einer nach dem erfindungsgemäßen Verfahren hergestellten Vorform zugeordnet. Die Vorform 1 besteht aus einer Kernglaszone 2, einer ersten Mantelglasschicht 3, einer zweiten Mantelglasschicht 4 und einer dritten Mantelglasschicht 5.

Die Kernglaszone 2 besteht aus Quarzglas, das homogen mit 5 Gew.-% Germaniumdioxid dotiert ist. Der Durchmesser "d_{K}" der Kernglaszone 2 beträgt 7 mm. Die erste Mantelglasschicht 3 hat einen Außendurchmesser "d_{M1}" von 13,9 mm. Das Verhältnis der Durchmesser "d_{M1}" /"d_{K}" beträgt somit 1,99.

Zur Herstellung der Vorform 1 werden die Kernglaszone 2 und erste Mantelglasschicht 3 als Kernstab bereitgestellt, auf den die zweite Mantelglasschicht 4 in Form eines Mantelrohres aufkollabiert wird. Die zweite Mantelglasschicht 4 besteht aus undotiertem Quarzglas. Sie hat im Ausführungsbeispiel einen Außendurchmesser von 26,8 mm. Das Verhältnis von Außendurchmesser und Innendurchmesser liegt somit in der Mantelglasschicht 4 bei 1,9. Im ursprünglichen Mantelrohr, aus dem die zweite Mantelglasschicht 4 hergestellt ist, liegt dieses Verhältnis - in Abhängigkeit von der Spaltweite zwischen Mantelrohr und Kernstab vor dem Aufkollabieren - etwas niedriger.

Die zweite Mantelglasschicht 4 wird von einem sogenannten Jacketrohr überfangen, das den größten Volumenanteil der Vorform 1 in Form der weiteren, dritten Mantelglasschicht 5 bildet.

Nachfolgend wird anhand den **Figuren 1 und 2** das erfindungsgemäße Verfahren zur Herstellung einer optischen Faser beispielhaft erläutert.

Zur Durchführung des erfindungsgemäßen Verfahrens wird zunächst ein sogenannter Kernstab mittels eines Soot-Abscheideverfahrens (OVD-Verfahren) durch Flammenhydrolyse von SiCl₄ und/oder GeCl₄ gebildet, wobei entsprechende Oxidpartikel auf der Mantelfläche eines um seine Längsachse rotierenden Dorns abgeschieden werden. Als Dorn wird ein Aluminiumoxid-Rohr mit einem Durchmesser von 5 mm eingesetzt. Mittels eines Abscheidebrenners wird zunächst die Kernglaszone 2 abgeschieden, indem dem Abscheidebrenner außer SiCl₄ auch GeCl₄ zugeführt wird, um die oben angegebene Dotierstoff-Konzentration der Kernglaszone 2 zu erhalten. Anschließend wird die Zufuhr von GeCl₄ gestoppt und auf der Kernglaszone 2 nach dem gleichen Verfahren die erste Mantelglasschicht 3 abgeschieden. Das nach Entfernen des Dorns erhaltene, poröse Quarzglasrohr wird in chlorhaltiger Atmosphäre getrocknet, anschließend gesintert und zu dem Kernstab kollabiert, wobei das Verhältnis der Durchmesser "d_{M1}" /"d_{K}" = 1,99 erhalten wird. Der Kernstab weist einen über seinen radialen Querschnitt homogenen OH-Gehalt von 0,004 Gew.-ppm auf. Die Herstellung des Kernstabs erfordert große Sorgfalt hinsichtlich Reinheit und Homogenität der abgeschiedenen Schichten und ist dementsprechend aufwendig und teuer.

Parallel dazu wird ein Mantelrohr ebenfalls durch Flammenhydrolyse von SiCl₄ unter Bildung von SiO₂-Partikeln und axialer Abscheidung der SiO₂-Partikel auf einem rotierenden Dorn hergestellt. Da das Mantelrohr zur Lichtführung in der aus der Vorform erhaltenen Faser nicht mehr wesentlich beiträgt, sind die Anforderungen an dessen Reinheit und Homogenität vergleichsweise gering. Das Mantelrohr ist daher kostengünstig unter gleichzeitigem Einsatz mehrerer Abscheidebrenner herstellbar. Vor dem Sintern wird das aus undotiertem, porösen Quarzglas bestehende Mantelrohr in chlorhaltiger Atmosphäre getrocknet. Nach dem Sintern hat das Mantelrohr einen Innendurchmesser von etwa 15 mm und einen Außendurchmesser von etwa 27 mm und einen mittleren, über die Wandstärke des Mantelrohres homogenen OH-Gehalt von 0,05 Gew.-ppm.

Ein wesentlicher Verfahrensschritt des erfindungsgemäßen Verfahrens besteht darin, dass das Mantelrohr auf den Kernstab aufkollabiert wird. Hierzu wird der Kernstab koaxial innerhalb des Mantelrohres angeordnet. In chlorhaltiger Atmosphäre bei einer Temperatur von etwa 1000 °C werden die den Ringspalt zwischen Kernstab und Mantelrohr begrenzenden Oberflächen gereinigt und dehydratisiert. Im Anschluß daran wird das Mantelrohr auf den Kernstab aufgeschmolzen, indem die Anordnung in einem elektrisch beheizten Ofen auf eine Temperatur von 2150 °C (Ofentemperatur) erhitzt wird. Das Schließen des Ringspalts erfolgt problemlos durch zonenweises Erhitzen der vertikal orientierten Anordnung. Nach dem Aufkollabieren bildet das Mantelrohr die zweite Mantelglasschicht 4. Die Grenzfläche zwischen erster Mantelglasschicht 3 und zweiter Mantelglasschicht 4 ist mit bloßem Auge kaum zu erkennen. An dieser Grenzfläche wird keine nennenswerte Erhöhung des OH-Gehalts über 0,1 Gew.-ppm hinaus festgestellt.

Der so erhaltene Quarzglasstab stellt in der späteren Lichtleitfaser den Faserkern und den zur Lichtführung beitragenden Mantel (das sogenannt "optische Cladding"). Er beinhaltet die homogen mit Germaniumdioxid dotierte Kernglaszone 2 mit einem Außendurchmesser von 7 mm und mit einem Brechungsindex "n_{K}", der um ca. 0,005 über dem Brechungsindex von undotiertem Quarzglas liegt. Die Kernglaszone 2 ist von einem Mantel aus undotiertem Quarzglas mit einem Brechungsindex "n_{M1}" von typischerweise 1,4585 umgeben. Der Mantel wird von der ersten Mantelglasschicht 3 und von der zweiten Mantelglasschicht 4, die den weitaus größten Volumenanteil des Mantels ausmacht, gebildet.

Zur Fertigstellung der Vorform wird der so erhaltene Quarzglasstab mit einem Überfangrohr aus undotiertem Quarzglas (dem sogenannten "Jacket-Rohr") überfangen, das die dritte Mantelglasschicht 5 bildet. Die Vorform weist danach einen Außendurchmesser von 100 mm auf. Die daraus gezogene Faser zeigt bei einer Wellenlänge von 1385 nm eine Dämpfung von 0,6 dB/km.

**Figur 4** zeigt schematisch einen typischen Verlauf der OH-Konzentration über den Durchmesser bei einer Vorform gemäß der Erfindung. Zum Vergleich ist der Verlauf der OH-Konzentration gemäß Figur 3 als punktierte Linie eingezeichnet.

Auf der y-Achse des Diagramms ist der OH-Gehalt und auf der x-Achse der Vorformdurchmesser aufgetragen. Kernglasschicht 41 erste Mantelglasschicht 42 zeigen einen gleichermaßen geringen OH-Gehalt; dieser beträgt gemäß obigem Ausführungsbeispiel 0,004 Gew.-ppm. Die zweite Mantelglasschicht 43 hat einen etwas höheren OH-Gehalt (0,05 Gew.-ppm), so dass die Grenzfläche 45 zwischen der ersten Mantelglasschicht 42 und der zweiten Mantelglasschicht 43 lediglich als kleine Stufe 44 im Verlauf der OH-Konzentration erkennbar ist. Ein ausgeprägtes Maximum der OH-Konzentration, wie es die nach dem Stand der Technik hergestellte Vorform (und damit auch die daraus erhaltene Faser) zeigt, ist bei der erfindungsgemäßen Vorform nicht vorhanden. Dadurch kann die Grenzfläche 45 nahe an der Kernglasschicht 41 liegen, ohne dass sich dies auf die optische Dämpfung der aus der Vorform erhaltenen Faser nachteilig auswirkt. Mit anderen Worten, der Außendurchmesser "d_{M1}" der ersten Mantelglasschicht 42 ist im Vergleich zu der Vorform gemäß Figur 3 relativ klein; bei der Vorform gemäß Figur 4 beträgt der Außendurchmessers "d_{M1}" der ersten Mantelglasschicht 42 lediglich das 1,99-fache des Durchmessers "d_{K}" der Kernglasschicht 41. Es ist daher möglich, den Anteil der aufwendig herzustellenden, inneren Mantelglasschicht 42 an der Vorform ohne Inkaufnahme einer höheren optischen Dämpfung zu verringern.

Näheres zu den im Zusammenhang mit der vorliegenden Erfindung relevanten Verfahren und Vorrichtungen für die Herstellung von synthetischem Quarzglas für optische Fasern durch CVD-Abscheidung sind aus folgenden Druckschriften zu entnehmen: In der US-A 5,788,730 wird ein Verfahren und ein Abscheidebrenner aus Quarzglas mit einer Mitteldüse und mindestens drei Ringspaltdüsen für die Herstellung eines Sootkörpers mit homogener radialer Dichteverteilung beschrieben; in der DE-A1 197 25 955 wird der Einsatz eines Brenners für eine Einspeisung von flüssigem Glasausgangsmaterial gelehrt; und in der DE-A1 195 01 733 wird eine Vorrichtung für die gleichzeitige und gleichmäßige Gasversorgung einer Vielzahl von Abscheidebrennern unter Einsatz eines Druckausgleichsgefäßes offenbart. Zur Steigerung der Effizienz der Soot-Abscheidung wird in der DE-A1 196 29 170 vorgeschlagen, ein elektrostatisches Feld zwischen Abscheidebrenner und Sootkörper anzulegen; in der DE-A1 196 28 958 und in der DE-A1 198 27 945 werden Maßnahmen für die Homogenisierung der Soot-Abscheidung bei Einsatz eines oszillierend bewegten Brenner-Arrays angegeben. Aus der DE-A1 197 51 919 und der DE-A1 196 49 935 sind Verfahren und Vorrichtungen zur Handhabung des Sootkörpers während und nach dem Abscheideprozess bekannt; und aus US-A 5,665,132, US-A 5,738,702 und DE-A1 197 36 949 ergeben sich Maßnahmen für die Halterung des Sootkörpers beim Verglasen. Die Dotierung von Quarzglas mit Fluor und Bor wird in der EP-A 582 070 beschrieben; in der US-A 5,790,736 wird eine Lehre zur Anpassung der Viskosität von Kern- und Mantelmaterial einer Faser gegeben; und in der DE 198 52 704 geht es um ein Verfahren zur Herstellung einer optischen Faser unter Einsatz dotierter Substratrohre nach dem MCVD-Verfahren. Die Nachbearbeitung eines verglasten Quarzglas-Hohlzylinders unter Einsatz eines speziellen Bohrers ist in der US-A 5,643,069 beschrieben. Die US-A 5,785,729 gibt eine Lehre zur Herstellung großvolumiger Vorformen unter Einsatz der Stab-in-Rohr-Technik; und die DE-A1 199 15 509 beschreibt einen zur Durchführung dieser Technik geeigneten Abzug. Gegenstand von EP-A1 767 149 und DE-A1 196 29 169 ist die Herstellung maßgenauer Quarzglas-Rohre durch ein Vertikalziehverfahren.

## Patentansprüche

1. Verfahren für die Herstellung einer optischen Faser durch Ziehen aus einer eine Kern-Mantelstruktur aufweisenden Vorform oder aus einer eine Kern-Mantelstruktur bildenden koaxialen Anordnung mehrerer Bauteile, durch Erzeugen eines Kernzylinders in einem Soot-Abscheideverfahren, wobei der Kernzylinder eine Kernglasschicht mit einem höheren Brechungsindex "n_{K}" und einem Außendurchmesser "d_{K}" aufweist, die von einer ersten Mantelglasschicht mit einem niedrigeren Brechungsindex "n_{M1}" und einem Außendurchmesser "d_{M1}" umgeben ist, und Aufbringen einer zweiten Mantelglasschicht auf den Kernzylinder, wobei die zweite Mantelglasschicht in Form eines in einem separaten Verfahrensschritt erzeugten Mantelrohres, das einen mittleren OH-Gehalt von maximal 1 Gew.-ppm aufweist, bereitgestellt und durch Aufkollabieren des Mantelrohres auf den Kernzylinder erzeugt wird, wobei ein Kernzylinder (2; 3) eingesetzt wird, bei dem das Verhältnis von "d_{M1}" zu "d_{K}" größer als 1 und kleiner als 2,2 ist, und der in einem oberflächennahen Bereich bis zu 10 µm Tiefe einen mittleren OH-Gehalt von maximal 1 Gew.-ppm aufweist, **dadurch gekennzeichnet, dass** der Kernzylinder (2; 3) nach einem OVD- Außenabscheideverfahren hergestellt wird, und dass die zweite Mantelglasschicht (4) mit einem Verhältnis von Außendurchmesser zu Innendurchmesser im Bereich zwischen 1,8 und 3 erzeugt wird und von mindestens einer weiteren, dritten Mantelglasschicht (5) umgeben wird.

2. Verfahren nach Anspruch 1, **dadurch gekennzeichnet, dass** ein Mantelrohr mit einem mittleren OH Gehalt von maximal Gew.-0,5 Gew.-ppm und ein Kernzylinder (2; 3) mit einem mittleren OH-Gehalt in einem oberflächennahen Bereich bis zu 10 µm Tiefe von maximal 0,5 Gew.-ppm eingesetzt werden.

3. Verfahren nach Anspruch 1, **dadurch gekennzeichnet, dass** ein Mantelrohr mit einem mittleren OH-Gehalt von maximal Gew.-0,2 Gew.-ppm und ein Kernzylinder (2; 3) mit einem mittleren OH-Gehalt in einem oberflächennahen Bereich bis zu 10 µm Tiefe von maximal 0,2 Gew.-ppm eingesetzt werden.

4. Verfahren nach Anspruch 1, **dadurch gekennzeichnet, dass** ein Mantelrohr mit einem mittleren OH-Gehalt von maximal Gew.-0,1 Gew.-ppm und ein Kernzylinder (2; 3) mit einem mittleren OH-Gehalt in einem oberflächennahen Bereich bis zu 10 µm Tiefe von maximal 0,1 Gew.-ppm eingesetzt werden.

5. Verfahren nach einem der vorhergehenden Ansprüche, **dadurch gekennzeichnet, dass** ein Kernzylinder (2; 3) eingesetzt wird, bei dem das Verhältnis von "d_{M1}" zu "d_{K}" kleiner als 2,0 ist.

6. Verfahren nach einem der vorhergehenden Ansprüche, **dadurch gekennzeichnet, dass** ein Kernzylinder (2; 3) eingesetzt wird, bei dem das Verhältnis von "d_{M1}" zu "d_{K}" kleiner als 1,7 ist.

7. Verfahren nach einem der vorhergehenden Ansprüche, **dadurch gekennzeichnet, dass** ein aus Quarzglas bestehendes Mantelrohr eingesetzt wird.

8. Verfahren nach einem der Ansprüche 1 bis 6, **dadurch gekennzeichnet, dass** ein aus SiO₂-Soot bestehendes Mantelrohr eingesetzt wird.

9. Verfahren nach einem der vorhergehenden Ansprüche, **dadurch gekennzeichnet, dass** ein Mantelrohr eingesetzt wird, mit einem Brechungsindex "n_{M2}", wobei "n_{M2}" ≤ "n_{M1}" ist.

10. Verfahren nach einem der vorhergehenden Ansprüche, **dadurch gekennzeichnet, dass** ein Mantelrohr aus fluordotiertem Quarzglas eingesetzt wird.

11. Verfahren nach Anspruch 1, **dadurch gekennzeichnet, dass** die dritte Mantelglasschicht (5) in Form eines Quarzglas-Hohlzylinders bereitgestellt wird, der zusammen mit dem Mantelrohr auf den Kernzylinder (2; 3) aufkollabiert wird.

12. Verfahren nach Anspruch 1, **dadurch gekennzeichnet, dass** die dritte Mantelglasschicht (5) in Form eines Hohlzylinders aus porösem SiO₂-Soot bereitgestellt wird, der nach dem Aufkollabieren auf die den Kernzylinder (2; 3) umschließende, zweite Mantelglasschicht (4) aufgeschrumpft wird.

13. Verfahren nach Anspruch 1, **dadurch gekennzeichnet, dass** die dritte Mantelglasschicht (5) nach dem Aufkollabieren des Mantelrohres auf den Kernzylinder (2; 3) durch Außenabscheidung von SiO₂-Soot erzeugt wird.

14. Verfahren nach Anspruch 1, **dadurch gekennzeichnet, dass** die zweite und die dritte Mantelglasschicht (5) erzeugt werden, indem ein außen mit porösem SiO₂-Soot beschichtetes Mantelrohr bereitgestellt und auf den Kernzylinder (2; 3) aufkollabiert wird.

15. Verfahren nach einem der vorhergehenden Ansprüche, **dadurch gekennzeichnet, dass** das Aufkollabieren eine koaxiale Anordnung von Mantelrohr und Kernzylinder (2; 3) unter Bildung eines Ringspalt umfasst, und dass während des Aufkollabierens wasserstoffhaltige Substanzen im Ringspalt vermieden werden.

16. Verfahren nach Anspruch 15, **dadurch gekennzeichnet, dass** im Ringspalt ein Unterdruck erzeugt wird und/oder der Ringspalt Helium, Chlor, Fluor oder ein Gemisch dieser Gase enthält.

## Claims

1. A method for producing an optical fiber by drawing from a preform having a core-clad structure or from a coaxial arrangement of a plurality of components forming a core-clad structure, by producing a core cylinder in a soot deposition method, with the core cylinder having a core glass layer of a higher refractive index "n_{K}" and an outer diameter "d_{K}", which is surrounded by a first cladding glass layer of a lower refractive index "n_{M1}" and an outer diameter "d_{M1}", and by applying a second cladding glass layer onto the core cylinder, the second cladding glass layer being provided in the form of a cladding tube produced in a separate method step, the cladding tube having a mean OH concentration of not more than 1 wt-ppm, and by collapsing the cladding tube onto the core cylinder, a core cylinder (2; 3) being used with a ratio of "d_{M1}" to "d_{K}" of more than 1 and less than 2.2, and the core cylinder having a mean OH concentration of not more than 1 wt-ppm in an area near the surface up to a depth of 10 µm, **characterized in that** the core cylinder (2; 3) is produced according to an outside vapor deposition method (OVD method), and that the second cladding glass layer (4) is produced with the ratio of outer diameter to inner diameter being between 1.8 and 3 and that the second cladding glass layer (4) is surrounded by at least one additional third cladding glass layer (5).

2. A method according to claim 1, **characterized in that** a cladding tube with a mean OH concentration of not more than 0.5 wt-ppm and a core cylinder (2; 3) with a mean OH concentration of not more than 0.5 wt-ppm in an area near the surface up to a depth of 10 µm are used.

3. A method according to claim 1, **characterized in that** a cladding tube with a mean OH concentration of not more than 0.2 wt-ppm and a core cylinder (2; 3) with a mean OH concentration of not more than 0.2 wt-ppm in an area near the surface up to a depth of 10 µm are used.

4. A method according to claim 1, **characterized in that** a cladding tube with a mean OH concentration of not more than 0.1 wt-ppm and a core cylinder (2; 3) with a mean OH concentration of not more than 0.1 wt-ppm in an area near the surface up to a depth of 10 µm are used.

5. A method according to any one of the preceding claims, **characterized in that** a core cylinder (2; 3) is used with the ratio of "d_{M1}" to "d_{K}" being smaller than 2.0.

6. A method according to any one of the preceding claims, **characterized in that** a core cylinder (2; 3) is used with the ratio of "d_{M1}" to "d_{K}" being smaller than 1.7.

7. A method according to any one of the preceding claims, **characterized in that** a quartz glass cladding tube is used.

8. A method according to any one of the claims 1 to 6, **characterized in that** a SiO₂ soot cladding tube is used.

9. A method according to any one of the preceding claims, **characterized in that** a cladding tube with a refractive index "n_{M2}" is used, where "n_{M2}"≤ "n_{M1}".

10. A method according to any one of the preceding claims, **characterized in that** a cladding tube of fluorine-doped quartz glass is used.

11. A method according to claim 1, **characterized in that** the third cladding glass layer (5) is provided in the form of a quartz glass hollow cylinder which is collapsed, together with the cladding tube, onto the core cylinder (2; 3).

12. A method according to claim 1, **characterized in that** the third cladding glass layer (5) is provided in the form of a hollow cylinder of porous SiO₂ soot which, after collapsing, is being shrunk onto the second cladding glass layer (4) surrounding the core cylinder (2; 3).

13. A method according to claim 1, **characterized in that** the third cladding glass layer (5) is produced by outside deposition of SiO₂ soot after collapsing of the cladding tube onto the core cylinder (2; 3).

14. A method according to claim 1, **characterized in that** the second cladding glass layer and the third cladding glass layer (5) are produced by providing a cladding tube, coated on the outside with porous SiO₂ soot, the cladding tube being collapsed onto the core cylinder (2; 3).

15. A method according to any one of the preceding claims, **characterized in that** collapsing comprises a coaxial arrangement of cladding tube and core cylinder (2; 3) by formation of an annular gap and that hydrogen-containing substances are avoided in the annular gap during the collapsing process.

16. A method according to claim 15, **characterized in that** negative pressure is established in the annular gap and/or that the annular gap contains helium, chlorine, fluorine or a mixture of said gases.

## Revendications

1. Procédé pour la fabrication d'une fibre optique par étirage à partir d'une ébauche présentant une structure d'enveloppe de coeur ou à partir d'une disposition coaxiale de plusieurs composants formant une structure d'enveloppe de coeur par production d'un mandrin de coeur dans un procédé de précipitation de suie, le mandrin de coeur présentant une couche de verre de coeur avec un indice de réfraction "n_{K}" plus élevé et un diamètre externe "d_{K}"' qui est entouré par une première couche de verre d'enveloppe avec un indice de réfraction plus faible "n_{M1}" et d'un diamètre externe "d_{M1}", et par application d'une seconde couche de verre d'enveloppe sur le mandrin de coeur, la seconde couche d'enveloppe étant préparée et réalisée sous forme d'un tube d'enveloppe généré dans une étape de procédé séparée et présentant une teneur OH moyenne de maximum 1 ppm en poids, et par effondrement du tube d'enveloppe sur le mandrin de coeur, un mandrin de coeur (2; 3) étant utilisé, où le rapport entre "d_{M1}" et "d_{K}" est supérieur à 1 et inférieur à 2,2, lequel mandrin qui présente dans une zone proche de la surface jusqu'à 10 µm, une teneur OH moyenne de maximal 1 ppm en poids, **caractérisé en ce que** le mandrin de coeur (2; 3) est fabriqué selon un procédé d'oxydation en phase vapeur externe-dépôt latéral et **en ce que** la seconde couche de verre d'enveloppe (4) est réalisée avec un rapport entre le diamètre externe et le diamètre interne compris entre 1,8 et 3 et est entouré au moins d'une troisième couche de verre d'enveloppe (5).

2. Procédé selon la revendication 1, **caractérisé en ce qu'**un tube d'enveloppe avec une teneur OH moyenne de maximal 0,5 ppm en poids et un mandrin de coeur (2; 3) avec une teneur OH moyenne de maximal 0,5 ppm en poids dans une zone proche de la surface jusqu'à une profondeur de 10 µm sont utilisés.

3. Procédé selon la revendication 1, **caractérisé en ce qu'**un tube d'enveloppe avec une teneur OH moyenne de maximal 0,2 ppm en poids et un mandrin de coeur (2; 3) avec une teneur OH moyenne de maximal 0,2 ppm en poids dans une zone proche de la surface jusqu'à une profondeur de 10 µm sont utilisés.

4. Procédé selon la revendication 1, **caractérisé en ce qu'**un tube d'enveloppe avec une teneur OH moyenne de maximal 0,1 ppm en poids et un mandrin de coeur (2; 3) avec une teneur OH moyenne de maximal 0,1 ppm en poids dans une zone proche de la surface jusqu'à une profondeur de 10 µm sont utilisés.

5. Procédé selon l'une des revendications précédentes, **caractérisé en ce qu'**un mandrin de coeur (2; 3) est utilisé où le rapport entre "d_{M1}" et "d_{K}" est inférieur à 2,0.

6. Procédé selon l'une des revendications précédentes, **caractérisé en ce qu'**un mandrin de coeur (2; 3) est utilisé où le rapport entre "d_{M1}" et "d_{K}" est inférieur à 1,7.

7. Procédé selon l'une des revendications précédentes, **caractérisé en ce qu'**un tube d'enveloppe se composant de verre de quartz est utilisé.

8. Procédé selon l'une des revendications précédentes, **caractérisé en ce qu'**un tube d'enveloppe se composant de suie de SiO₂ est utilisé.

9. Procédé selon l'une des revendications précédentes, **caractérisé en ce qu'**un tube d'enveloppe est utilisé dont l'indice de réfraction est "n_{M2}", "n_{M2}" est inférieur ou égal à "n_{M1}".

10. Procédé selon la revendication 1, **caractérisé en ce qu'**un tube d'enveloppe en verre de quart dopé au fluor est utilisé.

11. Procédé selon la revendication 1, **caractérisé en ce que** la troisième couche de verre d'enveloppe (5) est préparée sous forme d'un mandrin creux de verre de quartz, qui s'effondre ensemble avec le tube d'enveloppe sur le mandrin de coeur (2; 3).

12. Procédé selon la revendication 1, **caractérisé en ce que** la troisième couche de verre d'enveloppe (5) est préparée sous forme d'un mandrin creux en suie poreuse SiO₂, qui est rétracté après l'effondrement sur la seconde couche de verre d'enveloppe (4) enrobant le mandrin de coeur (2; 3).

13. Procédé selon la revendication 1, **caractérisé en ce que** la troisième couche de verre d'enveloppe (5) est générée après l'effondrement du tube d'enveloppe sur le mandrin de coeur (2; 3) par oxydation en phase vapeur externe-dépôt latéral de suie SiO₂.

14. Procédé selon la revendication 1, **caractérisé en ce que** la seconde et la troisième couche de verre d'enveloppe (5) sont générées dans le fait qu'un tube d'enveloppe revêtu à l'extérieur avec de la suie SiO₂ est préparé et est effondré sur le mandrin de coeur (2; 3).

15. Procédé selon l'une des revendications précédentes, **caractérisé en ce que** l'effondrement comprend une disposition coaxiale du tube d'enveloppe et du mandrin de coeur (2; 3) en formant une fente annulaire et **en ce que** pendant l'effondrement des substances hydrogénées sont évitées dans la fente annulaire.

16. Procédé selon la revendication 15, **caractérisé en ce que** dans la fente annulaire, il est généré une dépression et/ou la fente annulaire contient de l'hélium, du chlore, du fluor ou un mélange de ces gaz.
